# EUROPÄISCHE PATENTSCHRIFT

(11) **EP 2 666 813 B1**
(45) Veröffentlichungstag und Bekanntmachung des Hinweises auf die Patenterteilung: **18.05.2016**
(21) Anmeldenummer: 13179226.9
(22) Anmeldetag: 26.11.2009
(51) Int. Cl.: C08K 3/00, C08K 5/00, C08K 5/103

(54) **GLEITMITTEL FÜR THERMOPLASTISCHE POLYMERE**
LUBRICANT FOR THERMOPLASTIC POLYMERS
LUBRIFIANT POUR POLYMÈRES THERMOPLASTIQUES

(30) Priorität: 01.12.2008 DE 102008059744
(43) Veröffentlichungstag der Anmeldung: 27.11.2013
(62) Teilanmeldung aus: 09771321.8
(73) Patentinhaber: Emery Oleochemicals GmbH, 40599 Düsseldorf (DE)
(72) Erfinder: Daute, Peter, 27616 Beverstedt (DE)
(74) Vertreter: Kinkeldey, Daniela

(56) Entgegenhaltungen:
- WO-A1-2006/017050
- GB-A- 2 075 031

## Beschreibung

Gegenstand der Erfindung ist eine Polymerzusammensetzung, beinhaltend mindestens ein thermoplastisches Polymer, mindestens ein Pigment oder mindestens einen Füllstoff oder ein Gemisch davon und mindestens einen Diester eines linearen Diols mit 2 bis 8 C-Atomen mit einer linearen oder verzweigten, gesättigten oder ungesättigten Monocarbonsäure mit 6 bis 44 C-Atomen wobei der Anteil an Diestern mit unterschiedlichen Fettsäureresten in einem Molekül weniger als 10 Gew.-%, bezogen auf die gesamte Menge an Diester, beträgt und wobei das Polymer ausgewählt ist aus der Gruppe bestehend aus Polypropylen, Polyethylen, Polystyrol, Polyether und Gummi oder Copolymere aus mindestens zwei der Vorstehenden.

Thermoplastische Polymere erfreuen sich großer Beliebtheit bei der Herstellung von Formkörpern aller Art. Üblicherweise erfolgt die Verarbeitung thermoplastischer Polymerer zu solchen Formkörpern durch mehrere Schritte, wobei in der Regel mindestens ein Schritt ein Erwärmen des Polymeren umfasst, wobei das Erwärmen häufig bis zu einer Temperatur durchgeführt wird, bei der das thermoplastische Polymere ein für die weitere Verarbeitung ausreichendes rheologisches Profil aufweist. Weitere Verarbeitungsschritte sind oft mit einer intensiven Durchmischung von thermoplastischen Polymeren und weiteren Inhaltsstoffen und mit einer Scherung des Polymeren verbunden. Im Rahmen solcher weiteren Verarbeitungsschritte wird beispielsweise durch Extrusion eine innige Durchmischung der unterschiedlichen Bestandteile einer den Formkörper ergebenden Mischung eines thermoplastischen Polymeren und weiterer Inhalts stoffe erreicht.

Zur Verbesserung der Verarbeitbarkeit zu Formkörpern wird solchen Mischungen aus thermoplastischen Polymeren und ggf. weiteren Inhaltsstoffen häufig ein sogenanntes Gleitmittel zugefügt.

So beschreibt beispielsweise die DE 38 12 014 die Verwendung von Ethylenglykolestem in Ca/Zn-Stabilisatoren. Als Ethylenglykolester werden die Ester des Ethylenglykols mit technischen Palmitin-/Stearinsäure-Schnitten (ca. 1:1) eingesetzt.

Es hat sich nun herausgestellt, dass insbesondere bei thermoplastischen Polymeren die Pigmente oder Füllstoffe enthalten, der Glanz der Oberfläche beim Einsatz von Alkylenglykoldiestern häufig zu wünschen übrig lässt. Insbesondere ergeben sich teilweise raue oder matte Oberflächen, die das Erscheinungsbild eines, aus einem entsprechenden thermoplastischen Polymeren hergestellten Formkörpers nachteilig beeinflussen können.

Es bestand daher ein Bedürfnis nach einem Gleitmittel für thermoplastische Polymere, das die Nachteile der aus dem Stand der Technik bekannten Lösungen überwindet. Insbesondere bestand ein Bedarf nach einem Gleitmittel für thermoplastische Kunststoffe, das eine Strukturverbesserung des thermoplastischen Polymeren mit sich bringt. Beispielsweise bestand ein besonderes Bedürfnis nach einem Gleitmittel, das einem thermoplastischen Polymeren und insbesondere aus einem derartigen thermoplastischen Polymeren hergestellten Formkörper zu einer verbesserten Oberflächenstruktur verhilft. Insbesondere bestand ein Bedürfnis nach einem Gleitmittel, das einem aus einem thermoplastischen hergestellten Formkörper zu einer Oberfläche verhilft, die weniger matt oder weniger rau ist und insbesondere einen verbesserten Glanz aufweist.

Es wurde nun gefunden, dass pigment- oder füllstoffhaltige thermoplastische Polymerzusammensetzungen, die einen oder mehrere Diester eines linearen Diols mit 2 bis 8 C-Atomen mit einer linearen oder verzweigten, gesättigten oder ungesättigten Monocarbonsäure mit 6 bis 44 C-Atomen enthalten zu Formkörpern mit Oberflächen führen können, die verbesserte Werte hinsichtlich Glanz oder Rauigkeit aufweisen, wenn in einer solchen Polymerzusammensetzung der Anteil an Diestern mit unterschiedlichen Fettsäureresten in einem Molekül weniger als 10 Gew.-%, bezogen auf die gesamte Menge an Diester, beträgt.

Gegenstand der vorliegenden Erfindung ist daher eine Polymerzusammensetzung, beinhaltend als Zusammensetzungsbestandteile
- Z1: mindestens 15 Gew.-%, bezogen auf die Polymerzusammensetzung, mindestens eines thermoplastischen Polymeren;
- Z2: 0,001 bis 15 Gew.-%, bezogen auf die Polymerzusammensetzung, eines Diesters eines linearen Diols mit 2 bis 8 C-Atomen mit einer linearen oder verzweigte, gesättigten oder ungesättigten Monocarbonsäure mit 6 bis 44 C-Atomen; und
- Z3: 0,1 bis 80 Gew.-%, bezogen auf die Polymerzusammensetzung, mindestens eines Pigments oder mindestens eines Füllstoffs oder eines Gemischs davon,
wobei der Anteil an Diestern mit unterschiedlichen Fettsäureresten an einem Diol weniger als 10 Gew.-%, bezogen auf die gesamte Menge an Diester, oder weniger als 8 Gew.-%, bezogen auf die gesamte Menge an Diester, beträgt.

Unter einer Polymerzusammensetzung wird im Rahmen der vorliegenden Erfindung eine anspruchsgemäße Zusammensetzung verstanden, die mindestens ein thermoplastisches Polymeres, mindestens einen Diester eines linearen Diols sowie mindestens ein Pigment oder einen Füllstoff enthält. Eine erfindungsgemäße Polymerzusammensetzung kann dabei grundsätzlich in beliebige Form vorliegen, beispielsweise als Pulver, als Granulat, als in beliebiger Form vorbereitetes Halbzeug, beispielsweise als Pellets, Stangen, Quader oder dergleichen.

Eine erfindungsgemäße Polymerzusammensetzung enthält im Rahmen der Erfindung mindestens 15 Gew.-% bezogen auf die Polymerzusammensetzung, mindestens eines thermoplastischen Polymeren.

Grundsätzlich kommen als geeignete Polymere alle dem Fachmann bekannten und in ihren Eigenschaften, insbesondere in der Oberflächenbeschaffenheit, beispielsweise hinsichtlich des Glanzes oder der Rauheit, von daraus hergestellten Formkörpern zu verbessernden thermoplastischen Polymere erfindungsgemäß in Betracht. Ein als Bestandteil der erfindungsgemäßen Polymerzusammensetzung geeignetes Polymeres ist beispielsweise ausgewählt aus der Gruppe bestehend aus Polypropylen (PP), Polyethylen (PE), Polyethylenterephthalat (PET), Polylactat (PLA), Polycarbonat, Polystyrolen, Polyurethane, Poylether, Gummi, vorzugsweise Polyisopren, Kautschuk, insbesondere NBR-Kautschuk, Polybutadien, Copolymeren aus mindestens zwei der Vorstehenden, insbesondere Polyethylen/Polypropylen-Copolymere und Gemischen aus mindestens zwei davon. Bevorzugt sind PE, PP, PET und PLA.

In einer erfindungsgemäßen Ausgestaltung ist die erfindungsgemäße Polymerzusammensetzung thermoplastisch und schmilzt nicht unter 80, vorzugsweise bei oder unter 140 und besonders bevorzugt bei oder unter 270°C. Meist liegen die erfindungsgemäß bevorzugten thermoplastischen Polymerzusammensetzungen bei 350° oder weniger als Schmelze vor. In erfindungsgemäßen thermoplastischen Polymerzusammensetzungen werden zu mehr als 50 Gew.-%, vorzugsweise zu mehr als 75 Gew.-% und besonders bevorzugt zu mehr als 90 Gew.-%, jeweils bezogen auf das oder die in der thermoplastischen Zusammensetzung eingesetzten Polymere, thermoplastische Polymere mit ebensolchen Schmelzverhalten eingesetzt.

Eine erfindungsgemäße Polymerzusammensetzung enthält mindestens 15 Gew.-%, bezogen auf die gesamte Polymerzusammensetzung, mindestens eines thermoplastischen Polymeren. Die Obergrenze für den Gehalt an thermoplastischen Polymeren kann dabei beispielsweise bei 99,899 Gew.-%, jeweils bezogen auf die gesamte Polymerzusammensetzung, oder darunter liegen, beispielsweise bei 98 Gew.-%, 96 Gew.-%, 94 Gew.-%, 92 Gew.-%, 90 Gew.-% oder darunter, beispielsweise bei 85 Gew.-%, 80 Gew.-%, 75 Gew.-%, 70 Gew.-%, 65 Gew-%, 60 Gew.-%, 55 Gew.-% oder 50 Gew.-%. Es ist darüber hinaus ebenso möglich, dass eine erfindungsgemäße Polymerzusammensetzung weniger an thermoplastischen Polymeren enthält, beispielsweise 45 Gew.-% oder weniger, beispielsweise 40 Gew.-% oder weniger, 35 Gew.-% oder weniger, 30 Gew.-% oder weniger, 25 Gew.-% oder weniger oder 20 Gew.-% oder weniger. In Abhängigkeit vom gewünschten Einsatzzweck kann die Untergrenze des Anteils an thermoplastischen Polymeren beispielsweise bei mehr als 15 Gew.-%, beispielsweise bei 16, 17, 18, 19 oder 20 Gew.-%, jeweils bezogen auf die gesamte Polymerzusammensetzung, liegen.

Eine erfindungsgemäße Polymerzusammensetzung soll thermoplastische Eigenschaften aufweisen. Dies schließt jedoch nicht aus, dass eine erfindungsgemäße Polymerzusammensetzung einen Anteil an nicht thermoplastischen Polymerbestandteilen, beispielsweise einen Anteil an Duromeren (in der Literatur häufig auch Duroplasten genannt), der jedoch höchstens bei einer Menge liegt, bei der die thermoplastischen Eigenschaften der gesamten Polymerzusammensetzung nicht derart nachteilig beeinflusst werden, dass eine thermoplastische Verarbeitung nicht oder nur Inkaufnahme gravierender Nachteile möglich ist.

Neben mindestens einem thermoplastischen Polymeren gemäß dem Bestandteil Z1 weist eine erfindungsgemäße Polymerzusammensetzung als Bestandteil Z2 noch 0,001 bis 15 Gew.-%, bezogen auf die gesamte Polymerzusammensetzung, eines Diesters eines linearen Diols mit 2 bis 8 C-Atomen mit einer linearen oder verzweigten, gesättigten oder ungesättigten Monocarbonsäure mit 6 bis 44 C-Atomen auf. Es ist im Rahmen de vorliegenden Erfindung wichtig, dass der Anteil an Diestern mit unterschiedlichen Fettsäuren an einem Diol weniger als 10 Gew.-%, bezogen auf die gesamte Menge an Diestern, oder weniger als 8 Gew.-%, bezogen auf die gesamte Menge an Diestern, beträgt.

Als Basis für die erfindungsgemäß einzusetzenden Diester eignen sich lineare Diole mit 2 bis 8 C-Atomen. Geeignete lineare Diole sind beispielsweise Ethylenglykol, n-Propylenglykol, n-Butylenglykol, n-Pentamethylenglykol, n-Hexamethylenglykol, n-Heptamethylenglykol oder n-Octamethylenglykol. Im Rahmen einer bevorzugten Ausführungsform der Erfindung ist der Diester ein Diester von Ethylenglykol, Propylenglykol, Butylenglykol, Pentamethylenglykol oder Hexamethylenglykol, insbesondere von Ethylenglykol, Propylenglykol oder Butylenglykol, wobei in vielen Fällen die Ester des Ethylenglykols ausgezeichnete Eigenschaften aufweisen.

Ein erfindungsgemäß einzusetzender Diester eines linearen Diols weist als Säurebestandteil des Esters eine lineare oder verzweigte, gesättigte oder ungesättigte Monocarbonsäure mit 6 bis 44 C-Atomen auf. Unter einem "Säurebestandteil" wird im Rahmen der vorliegenden Erfindung derjenige Molekülteil des Esters verstanden, der im Rahmen einer Esterspaltung, beispielsweise im Rahmen einer sauren oder alkalischen Esterspaltung im wässrigen Milieu, als Säure im Reaktionsgemisch nachweisbar wäre. Ein erfindungsgemäß einsetzbarer Diester weist dabei an einem Molekül zwei identische Säurebestandteile auf. Es ist erfindungsgemäß möglich, dass ein im Rahmen der erfindungsgemäßen Polymerzusammensetzung einsetzender Diester noch Anteile an Diestermolekülen aufweist, die unterschiedliche Säurebestandteile aufweisen. Erfindungsgemäß soll der Anteil solcher Diestermoleküle mit unterschiedlichen Säurebestandteilen weniger als 10 Gew.-%, beispielsweise weniger als 9,5 Gew.-% oder weniger als 9 Gew.-% oder weniger als 8 Gew.-% oder weniger als 7,5 Gew.-% oder weniger als 7 Gew.-% oder weniger als 6, 5, 4, 3, 2 oder 1 Gew.-%, jeweils bezogen auf den gesamten Anteil an Diestern in der Polymerzusammensetzung, betragen.

Auch kann der in der zuvor beschriebenen erfindungsgemäßen Polymerzusammensetzung eingesetzte Diester einen Anteil an Diester mit unterschiedlichen Fettsäureresten an einen Diol von mindestens 0,1 Ges.-%, oder 0,01 Gew.-%, oder 0,001 Gew.-%, jeweils bezogen auf die gesamte Menge an Diester, aufweisen.

Es hat sich erfindungsgemäß als besonders wirksam herausgestellt, wenn der Diester ein Diester mit einer linearen, gesättigten oder ungesättigten Monocarbonsäure mit 8 bis 22 C-Atomen, insbesondere mit 10 bis 20 oder 12 bis 18 C-Atomen ist.

Grundsätzlich eignen sich als Fettsäuren Capronsäure, Önanthsäure, Caprylsäure, Pelargonsäure, Caprinsäure, Laurinsäure, Myristinsäure, Palmitinsäure, Margarinsäure, Stearinsäure, Arachinsäure, Behensäure, Lignocerinsäure, Cerotinsäure, Montansäure, Melissinsäure, Undecylensäure, Myristoleinsäure, Palmitoleinsäüre, Petroselinsäure, Ölsäure, Elaidinsäure, Vaccensäure, Gadoleinsäure, Icosensäure, Cetoleinsäure, Erucasäure, Nervonsäure, Linolsäure, α-Linolensäure, γ-Linolensäure, Calendulasäure, Punicinsäure, α-Eleostearinsäure, Arachidonsäure, Timnodonsäure, Clupanodonsäure, Cervonsäure oder die sogenannten Dimerfettsäuren, wie sie durch Dimerisierung ungesättigter Fettsäuren mit bis zu 22 C-Atomen erhältlich sind. Im Rahmen einer bevorzugten Ausführungsform der vorliegenden Erfindung weist der erfindungsgemäß einsetzbare Diester als Säurerest eine lineare, gesättigte oder ungesättigte Monocarbonsäure mit 8 bis 22 C-Atomen auf. Vorzugsweise handelt es sich dabei um Caprinsäure, Laurinsäure, Myrestinsäure, Palmitinsäure, Margarinsäure, Stearinsäure, Arachinsäure oder Behensäure, insbesondere um Palmitinsäure, Stearinsäure oder Arachinsäure.

Eine erfindungsgemäße Polymerzusammensetzung kann einen Diester oder ein Gemisch aus zwei oder mehr Diestern enthalten. Es ist in diesem Zusammenhang jedoch wichtig, dass die oben beschriebene Obergrenze für nicht symmetrisch substituierte Diester, d. h. für Diester mit unterschiedlichen Säurebestandteilen eingehalten wird. Eine erfindungsgemäße Polymerzusammensetzung kann dann beispielsweise ein Gemisch aus zwei verschiedenen Diestern oder ein Gemisch aus drei verschiedenen Diestern oder ein Gemisch aus vier oder mehr verschiedenen Diestern enthalten.

Als Bestandteil Z3 enthält eine erfindungsgemäße Polymerzusammensetzung mindestens ein Pigment oder mindestens einen Füllstoff oder ein Gemisch aus einem oder mehreren Füllstoffen und einem oder mehreren Pigmenten.

Als Pigmente eignen sich grundsätzlich alle anorganischen oder organischen Pigmente, die mit der Polymerzusammensetzung als solche und insbesondere mit der Polymerzusammensetzung im Rahmen der vorgesehenen Verarbeitung verträglich sind. Pigmente können der Polymerzusammensetzung eine Farbe verleihen, es sind jedoch ebenso Pigmente geeignet, die die Polymerzusammensetzung weiß oder schwarz färben. Besonders geeignete Pigmente sind beispielsweise Titandioxid, Pigmente auf Zirconoxid Basis, Bariumsulfat, Zinkoxid (Zinkweiß) und Lithopone (Zinksulfit/Bariumsulfat), Ruß, Ruß-Titandioxid-Mischungen, Eisenoxidpigmente, Antimonoxid, Chromoxid, Spinelle wie Kobaltblau und Kobaltgrün, Cadmiumsulfit, Cadmiumselenit, Ultramarinblau oder organische Pigmente, wie Azopigmente, Phthalocyaninpigmente, Chinacridonpigmente, Perylenpigmente, Diketo-Pyrrolopyrrolpigmente oder Anthrachinonpigmente.

Als Füllstoffe eignen sich insbesondere Kalziumcarbonat, Dolomit, Gips, Wollastonit, Magnesiumoxid, Magnesiumhydroxid, Silikate, China-Clay, Talg, Glasfasern, Glaskugeln, Holzkugeln, Glimmer, Metalloxide oder Metallhydroxide, Ruß, Grafit, Gesteinsmehl, Schwerspat, Glasfasern, Talg, Kaolin oder Kreide oder Metallsulfate, beispielsweise Schwermetallsulfate die neben einer füllenden oder pigmentierenden Wirkung beispielsweise auch eine stabilisierende Wirkung auf die Polymerzusammensetzung ausüben können.

Der Anteil an Pigmenten oder Füllstoffen oder Gemischen aus einem oder mehreren Pigmenten und einem oder mehreren Füllstoffen an der gesamten Polymerzusammensetzung beträgt 0,1 bis 80 Gew.-% bezogen auf die Polymerzusammensetzung. Es ist erfindungsgemäß vorgesehen, dass eine Polymerzusammensetzung nur geringe Mengen an Pigmenten oder Füllstoffen, beispielsweise 0,5 bis etwa 10 oder 1 bis etwa 5 Gew.-% enthält. Es ist jedoch ebenso möglich, dass eine erfindungsgemäße Polymerzusammensetzung größere Mengen an Pigmenten oder Füllstoffen oder deren Gemischen, beispielsweise etwa 10 bis etwa 75 oder etwa 20 bis etwa 70 oder etwa 25 bis etwa 60 oder etwa 30 bis etwa 55 oder etwa 35 bis 50 oder etwa 40 bis etwa 45 Gew.-%, jeweils bezogen auf die gesamte Polymerzusammensetzung, enthält.

In weiteren Ausführungsformen der Erfindung enthält die Polymerzusammensetzung als Zusammensetzungsbestandfteil weitere Zusatzstoffe, ausgewählt aus der Gruppe bestehend aus Stabilisatoren, sonstigen Gleitmitteln, Weichmachern, Antiblockmitteln, Antibeschlagmitteln, Antistatika, Flammschutzmitteln, Farbstoffen, Pigmenten, Treibmitteln, Füllstoffen, Fetten, Ölen, Antioxidantien und Lösungsmitteln oder eine Mischung aus zwei oder mehr davon. Es können auch weitere übliche Zusatzstoffe der Kunststoffverarbeitung zugesetzt werden.

Stabilisatoren bewahren Kunststoffe wie PVC davor, sich bei hohen Temperaturen zu zersetzen oder chemisch zu verändern. Sie verbessern dadurch die Witterungsbeständigkeit. Eingesetzt werden beispielsweise Verbindungen auf der Basis von Blei, Calcium, Zink, Barium und Zinn.

Weitere Gleitmittel dienen beispielsweise dazu, die Verarbeitung von Polymeren durch Verminderung der Friktion zwischen den Polymerketten und die Herabsetzung der Wandhaftung der Schmelze noch weiter zu erleichtern. Häufig verwendete weitere Gleitmittel sind Metallseifen, wie Blei- und Calciumstearate und - laurate, die gleichzeitig als Co-Stabilisator wirken können.

Weichmacher verleihen dem Kunststoff Geschmeidigkeit und Flexibilität. Viele Weichmacher gehören zur Gruppe der Phthalate (DEHP, DINP und DIDP), sowie der Adipate und Citrate.

Antibeschlagmittel dienen dazu, die Bildung von Niederschlägen an der Oberfläche zu verhindern. Derartige Antibeschlagmittel sind beispielsweise in DE 10 2004 038 980 A1 und Plastics Additives Handbook, 5th Edition, Hanser Verlag, S. 609 bis 626 offenbart und durch die Cognis Oleochemicals GmbH zu beziehen.

Antiblockmittel sind Additive, die das Verkleben ("Blocken") beschichteter Flächen miteinander oder mit Substraten (z.B. beim Stapeln oder Verpacken) verhindern oder reduzieren. Je nach Ablüftzeit, Trocknungsgrad, Schichtdicke, Druck oder Temperatur bei einer bestimmten Belastung muss die Auswahl geeigneter Trennmittel erfolgen, die in der Regel dem Beschichtungsstoff zugesetzt werden und während der Trocknungsphase an die Oberfläche gelangen. Hierfür finden beispielsweise Paraffin, Polyethylenwachs, Wachsester, Siliconöle, Stearate, modifizierte Kieselsäuren und Talkum Verwendung.

Als Lösungsmittel können Wasser oder organische Lösungsmittel wie Alkohole, wie Polyglycol, insbesondere Polyethylenglycol oder Polypropylenglcol oder eine Mischung der vorstehend genannten, eingesetzt werden.

Erfindungsgemäß können grundsätzlich sowohl duromere ("duroplastische") als auch thermoplastische Polymere eingesetzt werden. Die Polymerzusammensetzung ist bevorzugt eine thermoplastische oder elastische Polymerzusammensetzung. Thermoplastische Polymerzusammensetzungen sind ab einem bestimmten Temperaturbereich reversibel umformbar. In weiteren Ausführungsformen der Erfindung ist die Polymerzusammensetzung eine nicht vernetzte, ggf. vernetzbare Polymerzusammensetzung, beispielsweise zur Herstellung von Elastomeren.

Stabilisatoren bewahren Kunststoffe wie PVC davor, sich bei hohen Temperaturen zu zersetzen oder chemisch zu verändern, und verbessern die Witterungsbeständigkeit. Eingesetzt werden beispielsweise Verbindungen auf der Basis von Blei, Calcium, Zink, Barium und Zinn.

Als Lösungsmittel können Wasser oder organische Lösungsmittel wie Alkohole eingesetzt werden.

In einer bevorzugten Ausführungsform der Erfindung ist die Polymerzusammensetzung eine thermoplastische Polymerzusammensetzung. Thermoplastische Polymerzusammensetzungen sind ab einem bestimmten Temperaturbereich reversibel umformbar. In weiteren Ausführungsformen der Erfindung ist die Polymerzusammensetzung eine nicht vernetzte, vernetzbare Polymerzusammensetzung, beispielsweise zur Herstellung von Elastomeren.

Ein weiterer Gegenstand der Erfindung ist ein Verfahren zur Herstellung eines Formkörpers, wobei eine erfindungsgemäße Polymerzusammensetzung zu dem Formkörper verarbeitet wird. Ein "Formkörper" im Sinne der Erfindung ist eine zu einer dreidimensionalen Raumform verarbeitete Polymermasse. Es kann sich dabei um einen durch thermische Verformung erhältlichen Formkörper handeln. Solche Formkörper werden beispielsweise durch die Verarbeitung von Thermoplasten nach bekannten Verfahren erhalten. Der Formköper kann jedoch auch ein vernetzter bzw. vulkanisierter Formkörper sein. Solche Formkörper werden beispielsweise bei der Verarbeitung von Elastomeren erhalten.

Ein weiterer Gegenstand der Erfindung ist ein Formkörper, beinhaltend eine erfindungsgemäße Polymerzusammensetzung oder hergestellt aus einer erfindungsgemäßen Polymerzusammensetzung.

Die erfindungsgemäßen thermoplastischen Polymerzusammensetzungen können allgemein nach bekannten Verfahren zu den erfindungsgemäßen Formkörpern umgesetzt werden. Dabei können die Polymerzubereitungen zunächst nach bekannten Methoden aufbereitet werden, beispielsweise durch die Einarbeitung von Zusatzstoffen oder durch die Umwandlung der Polymerzusammensetzung in eine geeignete Form, wie Granulate, Pulver, Pasten oder Lösungen. Gegebenenfalls werden die Polymerzusammensetzungen dabei mechanisch behandelt, also dispergiert, geknetet oder granuliert. Die Verarbeitung zu Formkörpern erfolgt beispielsweise durch Spritzgießen oder Extrudieren. Gegebenenfalls werden die Formteile nachbearbeitet, also umgeformt, geschnitten, oberflächenbehandelt oder verschweißt. Härtbare Polymerzusammensetzungen werden nach der Verpressung oder Vorformung zu Formteilen gehärtet.

Ein weiterer Gegenstand der Verfahren zur Verwendung zur Herstellung eines Formkörpers, beinhaltend die Verfahrensschritte:
- I): das Bereitstellen der erfindungsgemäßen thermoplastischen Polymerzusammensetzung;
- II): das Erhitzen der thermoplastischen Polymerzusammensetzung auf die Glasübergangstemperatur des thermoplastischen Polymeren oder auf eine Temperatur oberhalb der Glasübergangstemperatur des thermoplastischen Polymeren;
- III): Herstellung eines Formkörpers aus der im Verfahrensschritt II) hergestellten, erhitzten, thermoplastischen Polymerzusammensetzung.

Im Schritt I) des erfindungsgemäßen Verfahrens zur Herstellung eines Formkörpers wird zunächst eine erfindungsgemäße, thermoplastische Zusammensetzung bereitgestellt, wobei diese Bereitstellung vorzugsweise durch ein Verfahren gemäß der ersten Variante des erfindungsgemäßen Verfahrens erfolgt.

Sodann wird im Verfahrensschritt II) die thermoplastische Zusammensetzung auf die Glasübergangstemperatur des thermoplastischen Polymers oder auf einer Temperatur oberhalb der Glasübergangstemperatur des thermoplastischen Polymers erhitzt. In diesem Zusammenhang ist es wiederum bevorzugt, dass das Erhitzen der thermoplastischen Zusammensetzung auf eine Temperatur in einem Bereich von 5 Grad unterhalb der Glasübergangstemperatur (T_{g}) bis 100°C oberhalb der Glasübergangstemperatur des eingesetzten, thermoplastischen Polymers, besonders bevorzugt auf eine Temperatur in einem Bereich von 1 Grad unterhalb der Glasübergangstemperatur (Tg) bis 50°C oberhalb der Glasübergangstemperatur des eingesetzten, thermoplastischen Polymers und am meisten bevorzugt auf eine Temperatur in einem Bereich von 1 Grad oberhalb der Glasübergangstemperatur (Tg) bis 20°C oberhalb der Glasübergangstemperatur des eingesetzten, thermoplastischen Polymers erfolgt, wobei jedoch auch hier die obere Grenze des Temperaturbereiches im wesentlichen von der Zersetzungstemperatur des eingesetzten, thermoplastischen Polymers begrenzt wird.

Grundsätzlich können die Verfahrensschritte I) und II) zeitgleich oder hintereinander durchgeführt werden. Eine gleichzeitige Durchführung der Verfahrensschritte I) und II) ist beispielsweise dann sinnvoll, wenn die thermoplastische Zusammensetzung mittels eines Schmelzmischverfahrens hergestellt wird. Hier kann es gegebenenfalls vorteilhaft sein, die durch das Schmelzmischverfahren hergestellte Zusammensetzung unmittelbar in einen Formkörper zu überführen. Eine nacheinander erfolgende Durchführung der Verfahrensschritte I) und II) ist beispielsweise dann sinnvoll, wenn die thermoplastische Zusammensetzung mittels eines Trockenmischverfahrens hergestellt wird oder aber wenn die thermoplastische Zusammensetzung zwar mittels eines Schmelzmischverfahrens hergestellt wird, jedoch nicht unmittelbar nach der Herstellung der Bildung eines Formkörpers unterzogen wird sondern vielmehr zunächst gemäß dem Verfahrens schritt v) abgekühlt wird.

Im Verfahrensschritt III) des erfindungsgemäßen Verfahrens zur Herstellung eines Formkörpers wird aus der im Verfahrensschritt II) hergestellten, erhitzten, thermoplastischen Zusammensetzung ein Formkörper hergestellt. Als Verfahren zur Herstellung eines Formkörpers kommen insbesondere das Spritzgießen, das Extrusionsformen, das Kompressionsformen, das Schichtformen, das Laminierungsformen, das Hohlformen, das Vakuumformen und das Transferformen in Betracht, wobei das Spritzgießen besonders bevorzugt ist.

In einer bevorzugten Ausführungsform der Erfindung wird in einem weiteren Verfahrensschritt IV) mindestens ein Teilbereich des in Verfahrenschritt III) erhaltenen Formkörpers in seinem Massequerschnitt gegenüber Verfahrenschritt III) verringert.

Gegenstand der Erfindung ist auch ein Verfahren zur Herstellung eines Packgutes, beinhaltend als Verfahrensschritte das Bereitstellen eines Gutes und eines erfindungsgemäßen Formkörpers und das mindestens teilweise Umgeben des Gutes mit dem Formkörper.

Weiterhin entspricht es einer Ausgestaltung des erfindungsgemäßen Verfahrens zur Herstellung eines thermoplastischen Formkörpers, dass in mindestens einem weiteren Verfahrensschritt IV) mindestens ein Teilbereich des in Verfahrensschritt III) erhaltenen Formkörpers als Formkörperrohling dient und in seinem Massequerschnitt gegenüber verringert wird. Bei dem Massequerschnitt handelt es sich um den Querschnitt eines Bereiches des Formkörpers, der massiv aus der erfindungsgemäßen thermoplastischen Formmasse besteht. Beispielsweise bei Behältern oder Gebinden stellt der Massequerschnitt die Dicke eine Wandung dieser Behälter oder Gebinde dar. Bei eher faden- oder strangförmig ausgebildeten Formkörpern stellt der Massequerschnitt die Dicke dieser Fäden oder Stränge dar. Bei eher flächigen Gebilden wie Platten, Lagen, Bahnen, Filmen oder Folien stellt der Massequerschnitt die Stärke dieser flächigen Gebilde dar. Für das Verringern des Massequerschnitts kommen grundsätzlich alle dem Fachmann hierzu bekannten und geeigneten Methoden in Betracht. Hierunter fallen beispielsweise das Strecken in eine oder zwei Richtungen, Ziehen in eine oder zwei Richtungen, Schleudern oder Blasen, die jeweils vorzugsweise bei erhöhten Temperaturen erfolgen, bei denen die erfindungsgemäße thermoplastische Zusammensetzung so weich oder gar flüssig ist, dass ein Strecken, Ziehen Schleudern oder Blasen erfolgen kann. Der Teilbereich, in dem die Querschnittsverringerung erfolgt, macht vorzugsweise mindestens 50% und besonders bevorzugt mindesten 80% des in Schritt III) erhaltenen Formkörpers aus. Allgemein erfolgt das Strecken oder Ziehen, wenn aus dem in Schritt III) erhaltenen Formkörper eine Faser erhalten werden soll. Bei der Herstellung von Folien kann zum einen das Ziehen oder Strecken in eine oder mehrer Dimensionen erfolgen. So kann die aus einem Extruder laufende Bahn mit einer im Vergleich zu der Austrittsgeschwindigkeit aus dem Extruder höheren Geschwindigkeit auf eine Rolle gezogen werden. Soll hingegen ein Behälter oder Gebinde erhalten werden, so wird außer dem Strecken, Ziehen und Schleudern vornehmlich das Blasen in Schritt IV) eingesetzt. Hierbei erfolgt die Massequerschnittsverringerung durch das anlegen eines Gasdrucks. Der Gasdruck wird allgemein so gewählt, dass die meist mindestens auf Glasübergangstemperatur erhitzte thermoplastische Zusammensetzung des in Schritt III) erhaltenen Formkörpers gedehnt werden kann. In der Regel wird die Dehnung durch die Verwendung eines die Endform des Formkörpers habende Form begrenzt. Es weiterhin möglich, dass zwei oder mehrere der Verfahrenschritte I) bis IV) durch weitere Verfahrensschritte ergänzt werden und/oder zumindest zeitlich überlappende verlaufen. Dieses gilt insbesondere für die Verfahrensschritte III) und IV).

Einen Beitrag zur Lösung mindestens einer der eingangs genannten Aufgaben leistet weiterhin ein Verfahren zur Herstellung eines Packgutes beinhaltend als Verfahrensschritte:
a) das Bereitstellen eines Gutes und eines Formkörpers, insbesondere einer Folie, wobei der Formkörper erhältlich ist durch das vorstehend beschriebene Verfahren;
b) das mindestens teilweises Umgeben des Gutes mit dem Formkörper.

Bei dem im Verfahrensschritt a) bereitgestellten Gut handelt es sich beispielsweise um ein Pharmazeutikum, ein Körperpflegemittel oder ein Lebensmittel. Das mindestens teilweise umgeben des Gutes kann beispielsweise durch das in DE-A-103 56 769 beschriebene Verfahren erfolgen.

Durch die erfindungsgemäß eingesetzten Dieser und deren Verwendung als Gleitmittel werden die der Erfindung zugrundeliegenden Aufgaben gelöst.

### Experimenteller Teil

### 1. Herstellung des erfindungsgemäßen Gleitmittels:

### Beispiel 1:

Distearylphthalat, Loxiol G 60, Fa. Cognis-Oleochemicals

### Beispiel 2:

Ethylenglykoldipalmitat
90 g Ethylenglykol (Fa. Fluka), 571 g Palmitinsäure (Edenol C16 98-100, Fa. Cognis-Oleochemicals) und 0,3 g Zinn-(II)-oxalat (Fa. Goldschmidt) wurden unter Stickstoff aufgeheizt. Die Veresterungsreaktion setzte bei ca. 170 °C mit der Bildung von Wasser ein. Nach 3 h wurde durch Anlegen von Vakuum das Reaktionswasser weiter abgezogen und das Vakuum innerhalb von 4 h bis auf ca. 15 mbar- gesenkt. Die Endtemperatur betrug 230 °C. bei einer SZ < 6 war die Reaktion beendet. Es wurde auf 90 °C gekühlt und gefiltert. Ausbeute 568 g, SZ = 3,9, Tropfpunkt 70,5 °C.

### Beispiel 2:

Rilanit AGS, ein Ethylenglykolester mit einem Stearinsäure/Palmitinsäuregemisch (ca. 50 %:50 %) von Fa. Cognis

### 2. Herstellung der Dryblends (nicht erfindungsgemäß)

Aus PVC-Pulver und den verschiedenen Additiven wurde in einem Mischer der Firma Henschel ein Dryblend hergestellt (Materialmenge = 3 kg, Heiztemperatur = 120 °C, anschließendes Abkühlen), die Zusammensetzungen sind der nachfolgenden Tabelle zu entnehmen. Bleisulfat wirkt in diesen Beispielen auch als Pigment.

| Beispiel: | B1 | B2 | B3 |
|---|---|---|---|
| PVC Evipol SH 6520 | 100 | 100 | 100 |
| Pb-Sulfat, 3-basisch | 2 | 2 | 2 |
| Bleistearat 28 % | 0,5 | 0,5 | 0,5 |
| Calciumstearat | 0,5 | 0,5 | 0,5 |
| Distearylphthalat | 1 | - | - |
| Ethylenglykoldipalmitat | - | 1 | - |
| Rilanit AGS | - | - | 1 |

### 3. Herstellung der Flachbänder (nicht erfindungsgemäß)

Die Dryblends wurde auf einem Doppelschneckenextruder der Firma Weber zu einem Flachband extrudiert. (Parameter der Extrusion: Drehzahl = 15 UpM; Temperatur =190°C). Von den fertigen Flachbändern wurde der Glanz nach DIN 67530 bestimmt. Es wurden 5 Messungen durchgeführt und der Mittelwert gebildet.

| Glanz % | B1 | B2 | B3 |
|---|---|---|---|
| | 55,1 | 65,7 | 40,0 |
| | 55,2 | 63,6 | 44,1 |
| | 54,3 | 59,3 | 48,0 |
| | 48,5 | 62,1 | 39,3 |
| | 50,9 | 61,8 | 43,3 |
| Mittelwerte: | 52,8 | 62,5 | 44,36 |

Das Gleitmittel (B2) führt zu einer sehr glatten Oberfläche und einem sehr hohen Glanz. Distearylphthalat (B1) ist ein Gleitmittel, welches normalerweise in solchen Anwendungen verwendet wird und ist zum Vergleich aufgeführt. Die schlechteste Oberfläche wird mit einem Gleitmittel, welches unsymmetrische Ethylenglykolester enthält (B3) erreicht.

### Weitere Ausführungsformen der vorliegenden Erfindung

In einer Ausführungsform betrifft die Erfindung eine Polymerzusammensetzung, beinhaltend als Zusammensetzungsbestandteile
Z1 mindestens 15 Ges.-%, bezogen auf die Polymerzusammensetzung, mindestens eines thermoplastischen Polymers;
Z2 0,001 bis 15 Gew.-%, bezogen auf die Polymerzusammensetzung, eines Diesters eines linearen Diols mit 2 bis 8 C-Atomen mit einer linearen oder verzweigte, gesättigten oder ungesättigten Monocarbonsäure mit 6 bis 44 C-Atomen; und
Z3 0,1 bis 80 Gew.-%, bezogen auf die Polymerzusammensetzung, mindestens eines Pigments oder mindestens eines Füllstoffs oder eines Gemischs davon, wobei der Anteil an Diestern mit unterschiedlichen Fettsäureresten an einem Diol weniger als 10 Gew.-%, bezogen auf die gesamte Menge an Diester, oder weniger als 8 Gew.-%, bezogen auf die gesamte Menge an Diester, beträgt.

In einer bevorzugten Ausführungsform ist der symmetrische Diester ein Diester von Ethylenglykol, Propylenglykol, Butylenglykol, Pentaethylenglykol oder Hexaethylenglykol.

In einer weiteren bevorzugten Ausführungsform ist der symmetrische Diester ein Diester einer linearen gesättigten oder ungesättigten Monocarbonsäure mit 8 bis 22 C- Atomen.

In einem weiteren Ausführungsbeispiel ist der symmetrische Diester ein Diester des Ethylenglykols mit einer Fettsäure ausgewählt aus der Gruppe bestehend aus Myristinsäure, Palmitinsäure, Margarinsäure, Stearinsäure, Arachinsäure oder Behensäure ist.

Bei einer weiteren Ausführungsform enthält die Polymerzusammensetzung einen Diester oder ein Gemisch aus zwei oder mehr Diestern.

In einer weiteren bevorzugten Ausführungsform enthält die Polymerzusammensetzung einen Diester oder ein Gemisch aus zwei oder mehr Diestern in einer Menge von etwa 0,01 bis etwa 10 oder etwa 0,1 bis etwa 5 Gew.-%.

In einer weiteren bevorzugten Ausführungsform beträgt der Anteil an Diestern mit unterschiedlichen Fettsäureresten an einem Diol einen Anteil von mindestens 0,1 Gew.-%, oder 0,01 Gew.-%, oder 0,001 Gew.-%, jeweils bezogen auf die gesamte Menge an Diester.

Bei einer weiteren Ausführungsform ist das Polymer ausgewählt aus der Gruppe bestehend aus Polypropylen, Polyethylen, Polyethylenterephthalat, Polylactat, Polycarbonat, Polystyrol, Polyurethan, Polyether, Gummi oder Copolymere aus mindestens zwei der Vorstehenden.

In einer weiteren bevorzugten Ausführungsform ist der Füllstoff oder zwei oder mehr Füllstoffe oder das Pigment oder mindestens zwei oder zwei oder mehr Pigmente oder ein Gemisch aus Füllstoff und Pigment in einer Menge von 0,05 bis 60 Gew.-% oder 1 bis 50 Gew.-%, bezogen auf die gesamte Polymerzusammensetzung enthalten.

Bei einer weiteren bevorzugten Ausführungsform enthält die Polymerzusammensetzung mindestens einen oder mehrere Zusatzstoffe.

In einer weiteren bevorzugten Ausführungsform ist als Zusatzstoff mindestens ein Zusatzstoff ausgewählt aus der Gruppe bestehend aus Stabilisatoren, weiteren Gleitmitteln, Weichmachern, Antiblockmitteln, Antibeschlagmitteln, Antistatika, Flammschutzmitteln, Farbstoffen, Treibmitteln, Fetten, Ölen, Antioxidantien, Säurefänger, Nukleierungsmittel und Lösungsmitteln oder eine Mischung aus mindestens zwei davon enthalten.

Ein weiterer Aspekt der vorliegenden Erfindung betrifft ein Verfahren zur Herstellung einer Polymerzusammensetzung durch in Kontakt bringen von mindestens der folgenden Zusammensetzungskomponenten
Z1 mindestens 15 Gew.-%, bezogen auf die Polymerzusammensetzung, mindestens eines thermoplastischen Polymers;
Z2 0,001 bis 15 Gew.-%, bezogen auf die Polymerzusammensetzung, eines Diesters eines linearen oder verzweigten Diols mit 2 bis 8 C-Atomen mit einer linearen oder verzweigte, gesättigten oder ungesättigten Monocarbonsäure mit 6 bis 44 C-Atomen; und
Z3 0,1 bis 80 Gew.-%, bezogen auf die Polymerzusammensetzung, mindestens eines Pigments oder mindestens eines Füllstoffs oder eines Gemischs davon, wobei der Anteil an Diestern mit unterschiedlichen Fettsäureresten in einem Molekül weniger als 10 Gew.-% oder weniger als 8 Gew.-%, bezogen auf die gesamte Menge an Diester, beträgt.

In einer Ausführungsform betrifft die Erfindung ein Verfahren zur Herstellung eines Formkörpers, beinhaltend die Verfahrensschritte:
I) das Bereitstellen einer thermoplastischen Polymerzusammensetzung nach einem der Ansprüche 1 bis 10,
II) das Erhitzen der thermoplastischen Zusammensetzung auf die Glasübergangstemperatur des thermoplastischen Polymers oder auf eine Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

In einer bevorzugten Ausführungsform wird in einem weiteren Verfahrensschritt IV) mindestens ein Teilbereich des in Verfahrensschritt III) erhaltenen Formkörpers in seinem Massequerschnitt gegenüber Verfahrensschritt III) verringert.

In einer weiteren bevorzugten Ausführungsform ist der Formkörper ausgewählt aus einer Gruppe bestehend aus einem Behältnis, einer Folie, einer Faser.

In einer weiteren Ausführungsform betrifft die Erfindung ein Verfahren zur Herstellung eines Packgutes beinhaltend als Verfahrensschritte:
a) das Bereitstellen eines Gutes und eines Formkörpers, der nach einem Verfahren nach einem der Ansprüche 13 bis 15 erhältlich ist;
b) das mindestens teilweises Umgeben des Gutes mit dem Formkörper.

In einer weiteren Ausführungsform betrifft die Erfindung eine Verwendung eines Diesters eines linearen oder verzweigten Diols mit 2 bis 8 C-Atomen mit einer linearen oder verzweigte, gesättigten oder ungesättigten Monocarbonsäure mit 6 bis 44 C-Atomen, wobei der Anteil an Diestern mit unterschiedlichen Fettsäureresten an einem Diol weniger als 10 Gew.-%, bezogen auf die gesamte Menge an Diester, oder weniger als 8 Gew.-%, bezogen auf die gesamte Menge an Diester, beträgt, als Gleitmittel für thermoplastische Polymere.

## Patentansprüche

1. Eine Polymerzusammensetzung, beinhaltend als Zusammensetzungsbestandteile
Z1 mindestens 15 Gew.-%, bezogen auf die Polymerzusammensetzung, mindestens eines thermoplastischen Polymers;
Z2 0,001 bis 15 Gew.-%, bezogen auf die Polymerzusammensetzung, eines Diesters eines linearen Diols mit 2 bis 8 C-Atomen mit einer linearen oder verzweigte, gesättigten oder ungesättigten Monocarbonsäure mit 6 bis 44 C-Atomen; und
Z3 0,1 bis 80 Gew.-%, bezogen auf die Polymerzusammensetzung, mindestens eines Pigments oder mindestens eines Füllstoffs oder eines Gemischs davon, wobei der Anteil an Diestern mit unterschiedlichen Fettsäureresten an einem Diol weniger als 10 Gew.-%, bezogen auf die gesamte Menge an Diester, oder weniger als 8 Gew.-%, bezogen auf die gesamte Menge an Diester, beträgt und
wobei das Polymer ausgewählt ist aus der Gruppe bestehend aus Polypropylen, Polyethylen, Polystyrol, Polyether, Polyisopren und Polybutadien oder Copolymere aus mindestens zwei der Vorstehenden.

2. Die Polymerzusammensetzung nach Anspruch 1, wobei der symmetrische Diester ein Diester von Ethylenglykol, Propylenglykol, Butylenglykol, Pentaethylenglykol oder Hexaethylenglykol ist.

3. Die Polymerzusammensetzung nach Anspruch 1 oder 2, wobei der symmetrische Diester ein Diester einer linearen gesättigten oder ungesättigten Monocarbonsäure mit 8 bis 22 C- Atomen ist.

4. Die Polymerzusammensetzung nach einem der vorhergehenden Ansprüche, wobei der symmetrische Diester ein Diester des Ethylenglykols mit einer Fettsäure ausgewählt aus der Gruppe bestehend aus Myristinsäure, Palmitinsäure, Margarinsäure, Stearinsäure, Arachinsäure oder Behensäure ist.

5. Die Polymerzusammensetzung nach einem der vorhergehenden Ansprüche, wobei die Polymerzusammensetzung einen Diester oder ein Gemisch aus zwei oder mehr Diestern enthält.

6. Die Polymerzusammensetzung nach einem der vorhergehenden Ansprüche, wobei die Polymerzusammensetzung einen Diester oder ein Gemisch aus zwei oder mehr Diestern in einer Menge von etwa 0,01 bis etwa 10 oder etwa 0,1 bis etwa 5 Gew.-% enthält.

7. Die Polymerzusammensetzung nach einem der vorhergehenden Ansprüche, wobei der Anteil an Diestern mit unterschiedlichen Fettsäureresten an einem Diol einen Anteil von mindestens 0,1 Gew.-%, oder 0,01 Gew.-%, oder 0,001 Gew.-%, jeweils bezogen auf die gesamte Menge an Diester, beträgt.

8. Die Polymerzusammensetzung nach einem der vorhergehenden Ansprüche, wobei der Füllstoff oder zwei oder mehr Füllstoffe oder das Pigment oder mindestens zwei oder zwei oder mehr Pigmente oder ein Gemisch aus Füllstoff und Pigment in einer Menge von 0,05 bis 60 Gew.-% oder 1 bis 50 Gew.-%, bezogen auf die gesamte Polymerzusammensetzung, enthalten ist.

9. Die Polymerzusammensetzung nach einem der vorhergehenden Ansprüche, wobei die Polymerzusammensetzung mindestens einen oder mehrere Zusatzstoffe enthält.

10. Die Polymerzusammensetzung nach einem der vorhergehenden Ansprüche, wobei als Zusatzstoff mindestens ein Zusatzstoff ausgewählt aus der Gruppe bestehend aus Stabilisatoren, weiteren Gleitmitteln, Weichmachern, Antiblockmitteln, Antibeschlagmitteln, Antistatika, Flammschutzmitteln, Farbstoffen, Treibmitteln, Fetten, Ölen, Antioxidantien, Säurefänger, Nukleierungsmittel und Lösungsmitteln oder eine Mischung aus mindestens zwei davon enthalten ist.

11. Ein Verfahren zur Herstellung eines Formkörpers, beinhaltend die Verfahrensschritte:
I) das Bereitstellen einer thermoplastischen Polymerzusammensetzung nach einem der Ansprüche 1 bis 10,
II) das Erhitzen der thermoplastischen Zusammensetzung auf die Glasübergangstemperatur des thermoplastischen Polymers oder auf eine Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

12. Das Verfahren nach Anspruch 11, wobei in einem weiteren Verfahrensschritt IV) mindestens ein Teilbereich des in Verfahrensschritt III) erhaltenen Formkörpers in seinem Massequerschnitt gegenüber Verfahrensschritt III) verringert wird.

13. Das Verfahren nach einem der Ansprüche 11 oder 12, wobei der Formkörper ausgewählt ist aus einer Gruppe bestehend aus einem Behältnis, einer Folie, einer Faser.

14. Ein Verfahren zur Herstellung eines Packgutes beinhaltend als Verfahrensschritte:
a) das Bereitstellen eines Gutes und eines Formkörpers, der nach einem Verfahren nach einem der Ansprüche 11 bis 13 erhältlich ist;
b) das mindestens teilweises Umgeben des Gutes mit dem Formkörper.

15. Verwendung eines Diesters eines linearen oder verzweigten Diols mit 2 bis 8 C-Atomen mit einer linearen oder verzweigten, gesättigten oder ungesättigten Monocarbonsäure mit 6 bis 44 C-Atomen,
in einer pigment- oder füllstoffhaltigen thermoplastischen Polymerzusammensetzung, die ein Polymer ausgewählt aus der Gruppe bestehend aus Polypropylen, Polyethylen, Polystyrol, Polyether und Gummi oder Copolymere aus mindestens zwei der Vorstehenden enthält, zur Verbesserung der Oberflächenstruktur eines aus der Polymerzusammensetzung hergestellten Formkörpers,
wobei in der Polymerzusammensetzung der Anteil an Diestern mit unterschiedlichen Fettsäureresten in einem Molekül weniger als 10 Gew.-%, bezogen auf die gesamte Menge an Diester, beträgt und wobei die Verbesserung der Oberflächenstruktur eine Verringerung der Mattigkeit, eine Verringerung der Rauhigkeit oder eine Verbesserung des Glanzes ist.

16. Verwendung nach Anspruch 15, wobei der Anteil an Diestern mit unterschiedlichen Fettsäureresten an einem Diol weniger als 8 Gew.-%, bezogen auf die gesamte Menge an Diester beträgt.

17. Verwendung nach Anspruch 15 oder 16, wobei Polymerzusammensetzung eine Polymerzusammensetzung gemäß einem der Ansprüche 1-10 ist.

## Claims

1. Polymer composition comprising, as composition constituents
Z1 at least 15% by weight, based on the polymer composition, of at least one thermoplastic polymer;
Z2 from 0.001 to 15% by weight, based on the polymer composition, of a diester of a linear diol having from 2 to 8 carbon atoms with a linear or branched, saturated or unsaturated monocarboxylic acid having from 6 to 44 carbon atoms; and
Z3 from 0.1 to 80% by weight, based on the polymer composition, of at least one pigment or of at least one filler or of a mixture thereof, wherein the amount of diesters having different fatty acid moieties on a diol is less than 10% by weight, based on the total amount of diester, or less than 8% by weight, based on the total amount of diester, and
wherein the polymer is selected from the group consisting of polypropylene, polyethylene, polystyrene, polyether, polyisoprene and polybutadiene or copolymers of at least two of the above.

2. Polymer composition according to Claim 1, wherein the symmetrical diester is a diester of ethylene glycol, propylene glycol, butylene glycol, pentaethylene glycol or hexaethylene glycol.

3. Polymer composition according to Claim 1 or 2, wherein the symmetrical diester is a diester of a linear saturated or unsaturated monocarboxylic acid having from 8 to 22 carbon atoms.

4. Polymer composition according to any of the preceding claims, wherein the symmetrical diester is a diester of ethylene glycol with a fatty acid selected from the group consisting of myristic acid, palmitic acid, margaric acid, stearic acid, arachic acid or behenic acid.

5. Polymer composition according to any of the preceding claims, wherein the polymer composition comprises a diester or a mixture of two or more diesters.

6. Polymer composition according to any of the preceding claims, wherein the polymer composition comprises an amount of from about 0.01 to about 10% by weight or from about 0.1 to about 5% by weight of a diester or of a mixture of two or more diesters.

7. Polymer composition according to any of the preceding claims, wherein the amount of diesters having different fatty acid moieties on a diol is at least 0.1% by weight, or 0.01% by weight, or 0.001% by weight, based in each case on the total amount of the diester.

8. Polymer composition according to any of the preceding claims, wherein the amount present of the filler or two or more fillers or the pigment or at least two or two or more pigments or a mixture of filler and pigment is from 0.05 to 60% by weight or from 1 to 50% by weight, based on the total polymer composition.

9. Polymer composition according to any of the preceding claims, wherein the polymer composition comprises at least one or more additives.

10. Polymer composition according to any of the preceding claims, wherein as additive at least one additive is comprised that is selected from the group consisting of stabilizers, other lubricants, plasticizers, antiblocking agents, antimisting agents, antistatic agents, flame retardants, dyes, blowing agents, fats, oils, antioxidants, acid scavengers, nucleating agents and solvents, or a mixture of at least two thereof.

11. Process for producing a moulded article, comprising the following process steps:
I) providing a thermoplastic polymer composition according to any of Claims 1 to 10,
II) heating the thermoplastic composition to the glass transition temperature of the thermoplastic polymer, or to a temperature above the glass transition temperature of the thermoplastic polymer;
III) producing a moulded article from the heated thermoplastic composition produced in step II).

12. Process according to Claim 11, wherein, in a further step IV), the mass cross section of at least one subregion of the moulded article obtained in step III) is reduced with respect to step III).

13. Process according to Claim 11 or 12, wherein the moulded article is selected from a group consisting of a container, a foil, a fibre.

14. Process for producing a product for packaging comprising, as process steps:
a) providing a product and a moulded article obtainable according to a process according to any of Claims 11 to 13;
b) at least to some extent surrounding the product with the moulded article.

15. Use of a diester of a linear or branched diol having from 2 to 8 carbon atoms with a linear or branched, saturated or unsaturated monocarboxylic acid having from 6 to 44 carbon atoms,
in a pigment- or filler-containing thermoplastic polymer composition which comprises a polymer selected from the group consisting of polypropylene, polyethylene, polystyrene, polyether and rubber or copolymers of at least two of the above, for improving the surface structure of a moulded article produced from the polymer composition,
wherein in the polymer composition the amount of diesters with different fatty acid moieties in a molecule is less than 10% by weight, based on the total amount of diester, and wherein the improvement of the surface structure is a mattness reduction, a roughness reduction or a gloss improvement.

16. Use according to Claim 15, wherein the amount of diesters with different fatty acid moieties on a diol is less than 8% by weight, based on the total amount of diester.

17. Use according to Claim 15 or 16, wherein polymer composition is a polymer composition according to any of Claims 1 to 10.

## Revendications

1. Composition polymère, contenant en tant que constituants de la composition :
Z1 au moins 15 % en poids, par rapport à la composition polymère, d'au moins un polymère thermoplastique ;
Z2 0,001 à 15 % en poids, par rapport à la composition polymère, d'un diester d'un diol linéaire contenant 2 à 8 atomes C avec un acide monocarboxylique linéaire ou ramifié, saturé ou insaturé, contenant 6 à 44 atomes C ; et
Z3 0,1 à 80 % en poids, par rapport à la composition polymère, d'au moins un pigment ou d'au moins une charge ou d'un mélange de ceux-ci, la proportion de diesters comprenant différents esters d'acides gras sur un diol étant inférieure à 10 % en poids, par rapport à la quantité totale de diesters, ou inférieure à 8 % en poids, par rapport à la quantité totale de diesters, et le polymère étant choisi parmi le groupe constitué par le propylène, le polyethylène, le polystyrène, le polyether, le polyisoprène et le polybutadiène ou les copolymères d'au moins deux de ceux-ci.

2. Composition polymère selon la revendication 1, dans laquelle le diester symétrique est un diester d'éthylène glycol, de propylène glycol, de butylène glycol, de pentaéthylène glycol ou d'hexaéthylène glycol.

3. Composition polymère selon la revendication 1 ou 2, dans laquelle le diester symétrique est un diester d'un acide monocarboxylique linéaire saturé ou insaturé contenant 8 à 22 atomes C.

4. Composition polymère selon l'une quelconque des revendications précédentes, dans laquelle le diester symétrique est un diester d'éthylène glycol avec un acide gras choisi dans le groupe constitué par l'acide myristique, l'acide palmitique, l'acide margarique, l'acide stéarique, l'acide arachique ou l'acide béhénique.

5. Composition polymère selon l'une quelconque des revendications précédentes, dans laquelle la composition polymère contient un diester ou un mélange de deux diesters ou plus.

6. Composition polymère selon l'une quelconque des revendications précédentes, dans laquelle la composition polymère contient un diester ou un mélange de deux diesters ou plus en une quantité d'environ 0,01 à environ 10 ou d'environ 0,1 à environ 5 % en poids.

7. Composition polymère selon l'une quelconque des revendications précédentes, dans laquelle la proportion de diesters comprenant différentes esters d'acides gras sur un diol est une proportion d'au moins 0,1 % en poids ou de 0,01 % en poids ou de 0,001 % en poids, à chaque fois par rapport à la quantité totale de diesters.

8. Composition polymère selon l'une quelconque des revendications précédentes, dans laquelle la charge ou deux charges ou plus ou le pigment ou au moins deux pigments ou plus ou un mélange d'une charge et d'un pigment sont contenus en une quantité de 0,05 à 60 % en poids ou de 1 à 50 % en poids, par rapport à la composition polymère totale.

9. Composition polymère selon l'une quelconque des revendications précédentes, dans laquelle la composition polymère contient au moins un ou plusieurs additifs.

10. Composition polymère selon l'une quelconque des revendications précédentes, dans laquelle au moins un additif choisi dans le groupe constitué par les stabilisateurs, les lubrifiants supplémentaires, les plastifiants, les agents antiadhérents, les agents antibuée, les antistatiques, les agents ignifuges, les colorants, les agents gonflants, les graisses, les huiles, les antioxydants, les capteurs d'acides, les agents de nucléation et les solvants ou un mélange d'au moins deux d'entre eux est contenu en tant qu'additif.

11. Procédé de fabrication d'un corps moulé, comprenant les étapes de procédé :
I) la préparation d'une composition polymère thermoplastique selon l'une quelconque des revendications 1 à 10,
II) le chauffage de la composition thermoplastique à la température de transition vitreuse du polymère thermoplastique ou à une température supérieure à la température de transition vitreuse du polymère thermoplastique ;
III) la fabrication d'un corps moulé à partir de la composition thermoplastique chauffée fabriquée à l'étape de procédé II).

12. Procédé selon la revendication 11, dans lequel la section massive d'au moins une partie du corps moulé obtenu à l'étape de procédé III) est réduite par rapport à l'étape de procédé III) lors d'une étape de procédé IV) supplémentaire.

13. Procédé selon l'une quelconque des revendications 11 ou 12, dans lequel le corps moulé est choisi dans un groupe constitué par un récipient, une feuille, une fibre.

14. Procédé de fabrication d'un article emballé, comprenant en tant qu'étapes de procédé :
a) la préparation d'un article et d'un corps moulé, qui peut être obtenu par un procédé selon l'une quelconque des revendications 11 à 13 ;
b) l'entourage au moins partiel de l'article avec le corps moulé.

15. Utilisation d'un diester d'un diol linéaire ou ramifié contenant 2 à 8 atomes C avec un acide monocarboxylique linéaire ou ramifié, saturé ou insaturé, contenant 6 à 44 atomes C,
dans une composition polymère thermoplastique contenant un pigment ou une charge, qui contient un polymère, choisi parmi le groupe constitué par le polypropylène, le polyethylène, le polystyrène, le polyether et la gamme ou les copolymères d'au moins deux de ceux-ci, pour améliorer la structure de surface d'un corps moulé fabriqué à partir de la composition polymère,
la proportion de diesters comprenant différents esters d'acides gras par molécule étant inférieure à 10 % en poids dans la composition polymère, par rapport à la quantité totale de diesters, et
l'amélioration de la structure de surface étant une réduction de l'opacité, une réduction de la rugosité ou une amélioration de la brillance.

16. Utilisation selon la revendication 15, dans laquelle la proportion de diesters comprenant différents esters d'acides gras sur un diol est inférieure à 8 % en poids, par rapport à la quantité totale de diesters.

17. Utilisation selon la revendication 15 ou 16, dans laquelle la composition polymère est une composition polymère selon l'une quelconque des revendications 1 à 10.
